# FASCICULE DE BREVET EUROPEEN

(11) **EP 0 463 924 B1**
(45) Date de publication et mention de la délivrance du brevet: **08.02.1995**
(21) Numéro de dépôt: 91401615.9
(22) Date de dépôt: 17.06.1991
(51) Int. Cl.: H02G 1/08, G02B 6/44

(54) **Procédé pour la mise en place d'un câble à l'intérieur d'une conduite et dispositif pour la mise en oeuvre de ce procédé**
Verfahren zum Einziehen eines Kabels in ein Rohr und Vorrichtung zur Durchführung des Verfahens
Process for pulling a cable into a conduit and device for carrying out this process

(30) Priorité: 22.06.1990 FR 9007852
(43) Date de publication de la demande: 02.01.1992
(73) Titulaire: FRANCE TELECOM, 92131 Issy les Moulineaux (FR)
(72) Inventeur: Pecot, Alain, F-22300 Lannion (FR); Campion, Jean-Luc, F-22560 Pleumeur Bodou (FR)
(74) Mandataire: Armengaud Ainé, Alain

(56) Documents cités:
- EP-A- 0 264 767
- FR-A- 2 661 051
- GB-A- 2 122 367
- US-A- 4 715 747

## Description

La présente invention est relative à un procédé pour la mise en place d'un câble à l'intérieur d'une conduite de grande longueur au moyen d'une pression d'air comprimé exerçant sur ce câble une poussée appropriée, et concerne également un dispositif pour la mise en oeuvre de ce procédé.

On connaît déjà divers procédés pour introduire un câble, notamment pour télécommunications, en particuliers à fibres optiques, dans une conduite, à partir d'une extrémité de celle-ci et pour assurer le déplacement progressif de ce câble depuis cette extrémité jusqu'à l'orifice opposé, sur des longueurs pouvant être parfois très importantes. Parmi ces procédés, on peut mentionner celui qui consiste à munir la conduite, à l'une de ses extrémités, d'un manchon étanche, muni d'un orifice par lequel peut être introduit un filin ou analogue, associé dans le conduit à une pièce mobile formant furet et dont le profil est tel qu'elle puisse se déplacer dans la conduite tout en assurant une étanchéité relative satisfaisante de telle sorte que, sous l'effet d'une pression d'air introduite dans le conduit à travers le manchon étanche, s'exerce sur le furet un effet de poussée suffisant qui déplace le filin jusqu'à l'extrémité opposée de la conduite. Lorsque le furet atteint celle-ci, le filin est détaché de ce dernier et attaché en bout de câble à introduire, un traction en sens inverse sur le filin assurant ainsi l'introduction progressive du câble, déroulé d'un tambour ou touret approprié pendant que, simultanément, le filin est ré-enroulé à l'extrémité opposée sur un touret analogue. En variante, le câble, s'il n'est pas trop lourd et encombrant, peut-être lui-même directement attaché ou relié au furet et soufflé avec celui-ci dans la conduite, le déroulement du câble à partir de son touret, pouvant être si nécessaire assisté mécaniquement. Dans cette variante, on évite donc l'opération préalable de déplacement du furet dans un sens avant qu'il ne soit tiré dans l'autre pour mettre le câble en place ; en revanche, cette solution est rapidement impraticable si la longueur de la conduite est importante, en raison des frottements notables et inévitables du furet et surtout du câble sur la paroi interne de la conduite, qu'il est nécessaire de vaincre par la seule force de traction appliquée en tête du câble. En particulier, puisque cette force ne dépend que de la surface du furet sur laquelle s'applique la pression d'air comprimé et de la valeur de celle-ci, on comprend que, tant du fait du diamètre relativement étroit de la conduite que de la résistance mécanique opposée à la progression du câble, ces deux paramètres ne peuvent être maîtrisés au-delà de limites nécessairement imposées, ce qui rend le procédé finalement peu adapté.

La présente invention a pour objet un procédé de mise en place d'un câble qui consiste, pour un rapport donné des diamètres de la conduite et du câble et une pression d'air comprimé de soufflage déterminée, à accroître momentanément la surface portante sur laquelle s'exerce cette pression et par la suite à augmenter la force de traction sur le câble en déplacement dans la conduite qui en résulte.

On connaît par ailleurs, du document FR-A-2 660 790 publié le 11 Octobre 1991, un câble de télécommunications qui, dans le but d'accroître l'effort de poussée apte à provoquer le déplacement du câble dans une conduite, comporte un gaine externe munie d'au moins une ailette, de préférence hélicoïdale, s'étendant à partir de la gaine vers la surface interne de la conduite et dont la hauteur, augmentée du rayon de la gaine, est sensiblement égale, au jeu de déplacement près, à celui de la conduite. Mais une telle solution exige que l'ailette soit venue de fabrication avec la gaine, ce qui peut dans certaines applications n'être pas commode à réaliser et qui, de toute manière, grève en partie le prix de revient du câble.

La présente invention concerne un procédé qui fait appel à l'utilisation d'ailettes rapportées sur la gaine du câble pour accroître la surface offerte à la poussée du fluide de déplacement, ces ailettes ne formant pas cependant la partie intégrante de la gaine mais étant seulement temporairement solidarisée avec celle-ci, au cours du trajet du câble selon la longueur de la conduite.

A cet effet le procédé considéré, pour la mise en place d'un câble sensiblement selon l'axe d'une conduite cylindrique de grande longueur, se caractérise en ce qu'il consiste à monter à une des extrémités de la conduite un boîtier étanche, traversé axialement par le câble et comportant au moins un raccord avec une source d'air comprimé débitant dans le boîtier, et à fixer, à intervalles donnés sur la gaine du câble, des ailettes successives, entourant la gaine dans des plans perpendiculaires à l'axe du câble, le diamètre externe de chaque ailette étant légèrement inférieur à celui de la conduite.

L'invention concerne également un dispositif pour la mise en oeuvre de ce procédé, caractérisé en ce qu'il comporte, dans le boîtier étanche monté à l'extrémité de la conduite, un magasin à ailettes à travers lequel se déplace axialement le câble, traversant librement ces ailettes, et dans lequel celles-ci sont disposées successivement l'une derrière l'autre, perpendiculairement à l'axe du câble, un mécanisme à deux butées d'arrêt pour immobiliser les ailettes à l'intérieur du magasin puis pour libérer la première ailette en même temps qu'il arrête l'ailette suivante, des moyens pour provoquer un rapprochement progressif d'organes de verrouillage, propres à solidariser tour à tour chaque ailette contre la surface externe de la gaine du câble.

Dans un mode de réalisation préféré de l'invention, les ailettes sont formées de deux parties complémentaires, constituées chacune d'une plaquette mince à profil semi-cylindrique, les deux parties étant solidarisées entre elles selon un plan de joint diamétral commun et comportant un évidement central délimitant un passage axial dont le diamètre est légèrement supérieur à celui du câble afin de ménager un jeu intermédiaire avec la gaine externe de ce câble. Avantageusement, les deux parties d'une même ailette comportent respectivement des nervures et des rainures coopérantes. De préférence, ces nervures et rainures présentent un profil en queue d'aronde.

Selon une caractéristique particulière de l'invention, chaque plaquette semi-cylindrique, constituant une des deux parties de l'ailette, comporte deux alésages sensiblement radiaux, angulairement espacés et dans chacun desquels est monté un des organes de verrouillage de l'ailette sur la gaine du câble.

De façon préférée mais non exclusive, chaque organe de verrouillage est notamment constitué par un doigt, comportant une tête de poussée faisant légèrement saillie à l'extérieur de la plaquette semi-cylindrique et en contact, à l'intérieur de l'alésage le recevant, en direction de l'évidement central, avec un bloc élastique, propre à être déplacé sous l'effet de la tête de poussée dans le jeu intermédiaire réservé au passage du câble, afin de s'écraser partiellement sur la gaine externe de celui-ci en solidarisant l'ailette avec le câble. Avantageusement, le bloc élastique est constitué par du caoutchouc ou par un matériau analogue, présentant un fort coefficient de frottement, afin de solidariser fermement l'ailette et le câble.

Selon une caractéristique complémentaire, la tête de poussée de chaque doigt de verrouillage comporte au moins un cliquet à bille ou analogue, propre à coopérer avec une encoche prévue dans la paroi interne de l'alésage dans lequel se déplace le doigt afin d'immobiliser la tête dans la position où le bloc élastique est partiellement écrasé sur la gaine externe, en bloquant alors l'ailette en position par rapport à celle-ci.

Enfin, les deux plaquettes de chaque ailette comportent avantageusement chacune deux alésages et deux doigts de verrouillage, les alésages d'une plaquette étant disposés dans le prolongement de ceux de l'autre plaquette de la même ailette de façon à ce que les quatre doigts exercent radialement sur la gaine du câble un effort de blocage régulièrement réparti.

Dans un mode de réalisation particulier de l'invention, le boîtier comporte une paroi antérieure, munie d'un manchon étanche de guidage du câble qui traverse ce manchon et des orifices d'admission d'air sous pression, la magasin à ailettes étant monté à l'intérieur du boîtier dans le prolongement du manchon. De préférence et selon une autre caractéristique, le magasin comporte une paroi cylindrique dont le diamètre est supérieur à celui des ailettes augmenté de la distance sur laquelle les têtes de poussée des doigts de verrouillage font saillie à l'extérieur de ces ailettes.

Avantageusement, les butées d'arrêt des ailettes dans le magasin comportent deux crochets, solidaires chacun du piston d'un vérin à double effet et à mouvements alternatifs, commandé selon une séquence déterminée, de manière à permettre successivement de libérer la première ailette tout en bloquant la suivante, afin de libérer les ailettes une à une à la sortie du magasin.

Selon encore une autre caractéristique, les moyens pour provoquer le rapprochement progressif des organes de verrouillage de chaque ailette consistent en une portée conique, prévue à l'intérieur du boîtier, en aval du magasin par rapport au sens de déplacement du câble, de telle sorte que, pour chaque ailette libérée du magasin par l'une des deux butées et se déplaçant sous la poussée de l'air comprimé admis dans le boîtier, les têtes des doigts de verrouillage soient progressivement repoussées dans leurs alésages, en réalisant l'écrasement de leurs blocs élastiques sur la gaine, jusqu'à l'immobilisation de ces doigts, notamment par les cliquetis à clips ou à bille qu'ils comportent.

De préférence également, les surfaces externes des têtes de poussée des doigts de verrouillage sont recouvertes d'un matériau plastique à faible coefficient de frottement, notamment du genre "Teflon"®. D'autres particularités d'un dispositif pour la mise en place d'un câble à l'intérieur d'une conduite de grande longueur, établi conformément à l'invention, apparaîtront encore à travers la description qui suit d'un exemple de réalisation, donné à titre indicatif et non limitatif, en référence aux dessins annexés sur lesquels :
- La Figure 1 est une vue schématique du dispositif selon l'invention, permettant d'exposer les particularités du procédé envisagé.
- La Figure 2 est une vue en coupe transversale d'une ailette destinée à être mise en place autour de la gaine du câble, en vue d'autoriser le déplacement de celui-ci dans la conduite.
- La Figure 3 est une vue de dessus de l'ailette selon la Figure 2.
- La Figure 4 est une vue analogue à la Figure 2, mais dans laquelle l'ailette est représentée solidarisée du câble.
- La Figure 5 est une vue en coupe longitudinale plus détaillée du boîtier pour la mise en place des ailettes autour du câble.

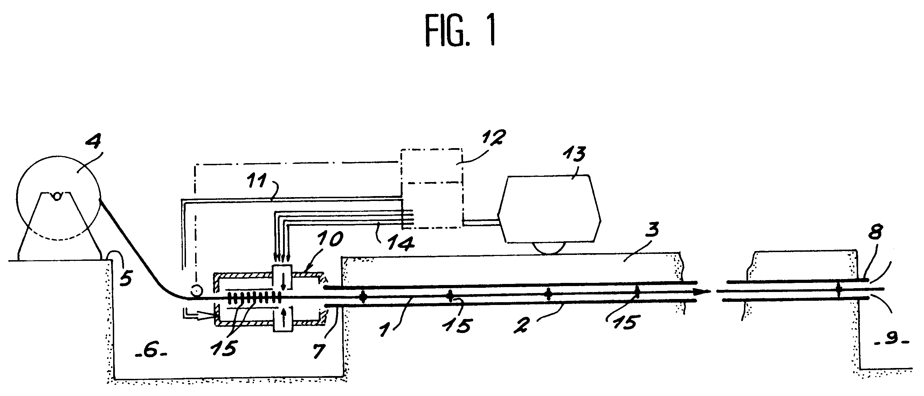

Sur la Figure 1, la référence 1 désigne un câble, notamment du genre câble de télécommunications, destiné à être mis en place dans une conduite 2, de grande longueur, enfouie sous un terrassement 3, le câble étant habituellement déroulé à partir d'un touret 4 reposant sur le sol 5 à l'extérieur de la conduite. Celle-ci débouche par l'une de ses extrémités 7 dans une cavité ou tranchée 6 et à l'autre extrémité 8, dans une tranchée analogue 9.

Selon l'invention, l'extrémité 7 de la conduite 2 est raccordée avec un boîtier 10, sensiblement étanche, relié par une canalisation 11 à un distributeur d'air comprimé 12, délivré à partir d'un compresseur 13. Des conduites 14 sont également réunies au boîtier 10 et au distributeur 12 pour permettre, de la façon exposée plus loin, la mise en place autour du câble 1, au fur et à mesure qu'il s'engage dans la conduite 2, d'ailettes 15, dont le diamètre est choisi légèrement inférieur à celui de la conduite pour permettre le déplacement du câble, sans frottement excessif de ces ailettes contre la surface interne de la conduite 2.

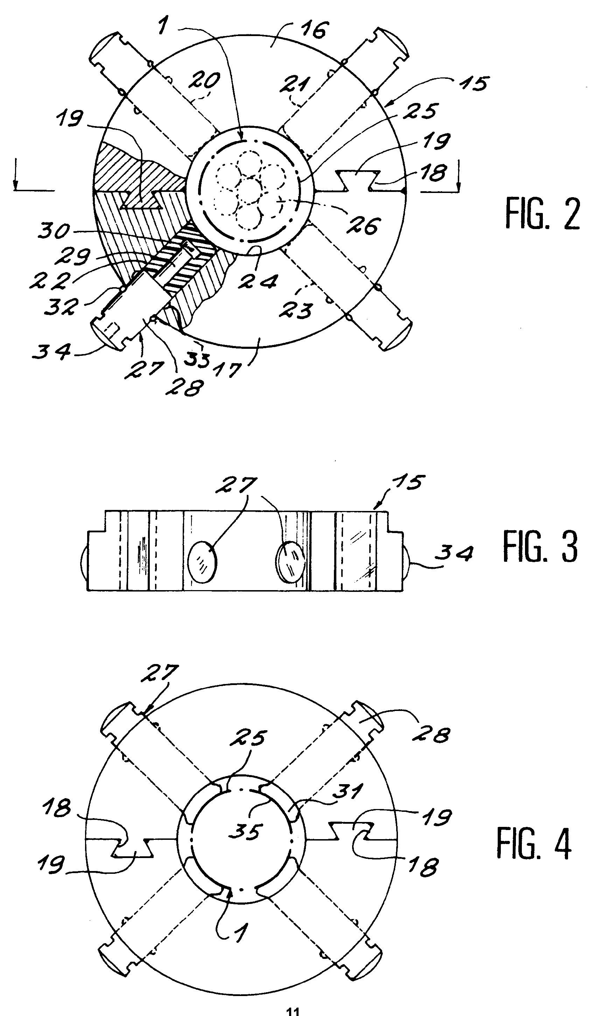

Les Figures 2 à 4 illustrent de façon plus détaillée la structure des ailettes 15 contenues dans le boîtier 10 et prévues pour être solidarisées au câble 1, au fur et à mesure de l'avance de celui-ci dans la conduite 2.

Chaque ailette 15 se compose ainsi de deux parties complémentaires, constituée chacune d'une plaquette mince, à profil semi-cylindrique, respectivement 16 et 17, ces deux plaquettes étant jointives selon un plan de joint diamétral commun. Chacune d'elles comporte une rainure 18, de préférence en forme de queue d'aronde, et une nervure 19, de même profil, apte à coopérer avec la rainure en regard de l'autre plaquette, en solidarisant les deux parties de l'ailette. Des alésages radiaux sont ménagés dans l'une et l'autre des plaquettes 16 et 17, ces alésages, respectivement 20 et 21 dans la plaquette 16, et 22 et 23 dans la plaquette 17, étant aménagés de telle sorte qu'ils soient deux à deux dans le prolongement les uns des autres, l'alésage 20 présentant ainsi le même axe que l'alésage 22 et l'alésage 21 le même axe que l'alésage 23.

Les deux plaquettes 16 et 17 de chaque ailette 15, une fois assemblées, délimitent un passage axial 24, réservé au câble 1, le diamètre de ce passage étant sensiblement supérieur à celui du câble, lui-même comportant une gaine externe 25 entourant de façon classique un faisceau de conducteurs 26.

Dans chacun des alésages 20 à 23 des plaquettes 16 et 17 est monté un doigt coulissant 27, comportant à une extrémité, opposée à celle dirigée vers le câble 1, une tête de poussée 28. Celle-ci présente, en direction du câble, une tige axiale 29, terminée par un épanouissement 30, permettant d'ancrer la tête dans un bloc élastique 31, ainsi solidarisé de cette tête et constituant avec celle-ci le doigt coulissant 27. Dans la tête 28 est prévu un cliquet à clips 32 ou à bille, destiné à coopérer avec un logement 33, ménagé dans l'alésage correspondant recevant le doigt, afin d'immobiliser celui-ci vis-à-vis de l'ailette 15, une fois la tête de poussée enfoncée suffisamment dans cet alésage, en faisant alors saillir vers l'intérieur du passage 24 l'extrémité du bloc élastique 31. Pour faciliter l'enfoncement du doigt dans son alésage, la tête de poussée 28 comporte une surface externe 34, avantageusement revêtue d'un matériau à faible coefficient de frottement, du genre "Teflon" notamment. Le bloc élastique 31 s'écrase ainsi particulièrement sur la gaine externe 25 du câble, en s'évasant alors légèrement comme représenté en 35 sur la Figure 4, de façon à solidariser alors l'ailette 15 avec le câble 1, en permettant à la poussée de l'air comprimé introduit dans le boîtier 10 d'exercer sur cette ailette un effort suffisant pour entraîner le câble dans son déplacement à l'intérieur de la conduite 2, le câble recevant au fur et à mesure de ce déplacement autant d'ailettes 15 que nécessaire, régulièrement espacées selon la longueur du câble.

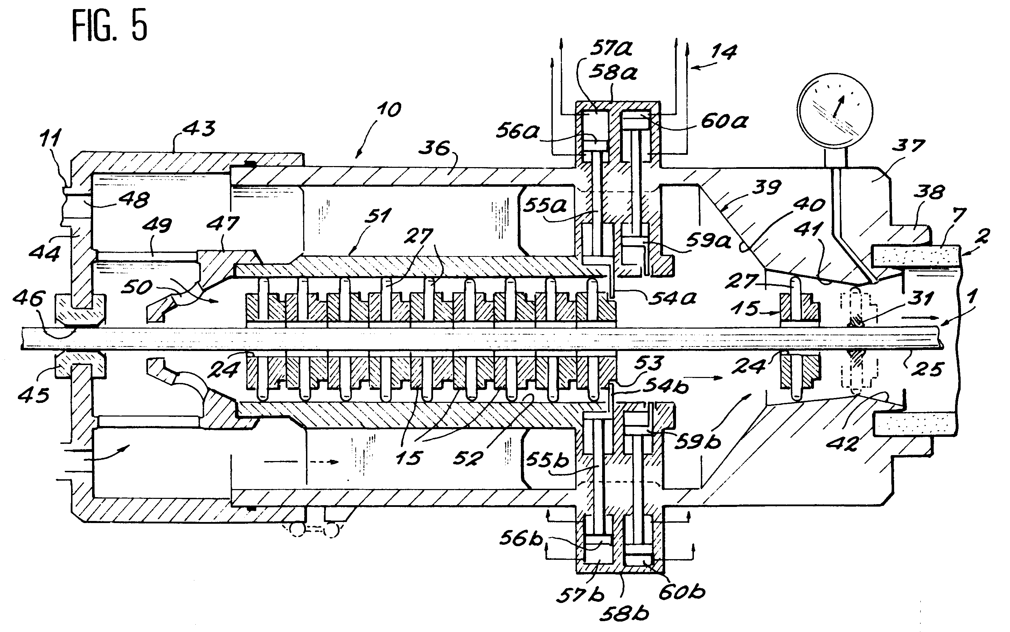

La Figure 5 illustre avec plus de détails la réalisation du boîtier 10 et des moyens permettant la mise en place successive des ailettes 15 sur la surface extérieure du câble 1, au contact avec la gaine 25 de celui-ci.

Le boîtier 10 comporte notamment une paroi cylindrique externe 36, terminée par une paroi frontale 37 au centre de laquelle est ménagée une collerette 38 dans laquelle vient s'emboîter l'extrémité 7 de la conduite 2. Le boîtier 10 étant dans ces conditions dans le prolongement étanche de celle-ci. Dans la partie frontale 37, vers l'intérieur du boîtier 10, est prévue une ouverture 39 de forme générale conique, qui présente deux parties successives, respectivement 40 et 41 dont l'angle d'inclinaison est différent, la partie 41 se prolongeant vers l'extrémité 7 de la conduite à laquelle se raccorde le boîtier par une zone évasée 42.

A l'opposé de la partie frontale 37, le boîtier 10 est fermé par un capot 43, comprenant une paroi transversale 44 et, sensiblement au centre de celle-ci, un manchon 45, muni d'un perçage axial 46 par lequel passe le câble 1 dévidé du touret 4, en même temps qu'il s'engage progressivement dans la conduite 2. A l'intérieur du boîtier 10, solidarisé de la paroi 44, est prévu un embout creux 47, l'air comprimé admis dans le boîtier par la canalisation de liaison 11 passant par des orifices 48 prévus dans la paroi 44 puis, à travers des fentes 49 de l'embout 47 et des passages 50, jusqu'à l'intérieur d'un magasin à ailettes 51, dans lequel sont stockés côte à côte des ailettes 15 du genre précédemment décrit en relation avec les Figures 2 à 4. A l'intérieur du magasin 51, les doigts 27, montés dans les alésages 20 à 23 des deux demi-plaquettes 16 et 17 formant chaque ailette 15, font saillie vers l'extérieur, les blocs élastiques 31 de ces ailettes étant dans ce cas hors de contact avec la gaine externe 25 du câble 1. En revanche, les têtes 28 de ces doigts s'appuient par leur revêtement 34 contre la surface interne 52 du magasin 51 et peuvent librement glisser dans ce dernier sous la poussée de l'air comprimé qui le traverse.

A l'extrémité du magasin 51 dirigée vers la partie frontale 37, sont montés des moyens permettant de délivrer les ailettes une à une hors du magasin puis d'assurer leur solidarisation avec le câble 1, afin de permettre l'entraînement de ce dernier sous la poussée de l'air comprimé s'exerçant sur ces ailettes.

A cet effet, chaque ailette 15 comporte un épaulement 53, apte à coopérer avec des crochets d'arrêt, respectivement 54a et 54b, prévus en bout de tige transversales 54a et 55b. Ces tiges sont solidaires de pistons 56a et 56b, mobiles dans les cylindres 57a et 57b de deux vérins 58a et 58b. Parallèlement aux crochets 54a et 54b sont également prévus deux autres crochets similaires 59a et 59b, actionnés par deux vérins 60a et 60b, tels que deux lorsque le premier des couples de crochets 54a et 54b immobilise le train d'ailettes 15 dans le magasin 51, le second couple a ses crochets 59a et 59b relevés et vice et versa. Dans ces conditions, la première ailette 15 peut être libérée du magasin 51 en échappant au premier couple de crochets et venir en appui contre le second couple, tandis que, lors de la phase suivante, cette première ailette est définitivement libérée dans le boîtier en avant du magasin, tandis que l'ailette suivante est à son tour bloquée par les premiers crochets et ainsi de suite jusqu'à épuisement de l'ensemble des ailettes hors du magasin.

Chaque ailette 15 ainsi libérée est alors entraînée dans le boîtier sous l'effet du flux d'air comprimé en circulation, jusqu'à ce que les têtes de poussée 28 de ses doigts 27 rencontrent la partie en pente 41 de la partie frontale 37, qui les compriment progressivement vers l'intérieur au fur et à mesure du déplacement de l'ailette considérée, en permettant aux blocs élastiques 31 de venir au contact de la gaine 25, puis de s'écraser légèrement sur celle-ci, en la solidarisant avec câble, les doigts 27 restant alors immobilisés en position grâce aux cliquets à clips 32 ou à bille, coopérant avec leurs encoches homologues 33.

On réalise ainsi un dispositif permettant, conformément au procédé de l'invention, la mise en place d'ailettes successives sur un câble au fur et à mesure de sa mise en place dans une conduite de grande longueur, assurant une répartition équilibrée des efforts exercés sur ce câble par la poussée de l'air comprimé déterminant l'avance du câble, ces ailettes étant seulement mises en place momentanément au fur et à mesure du déplacement du câble. Les ailettes sont calculées afin de pouvoir exercer sur le câble un effort de traction approprié, le nombre des ailettes mises en place est en fonction de la poussée globale à exercer. En outre, il y a lieu de souligner que, selon l'invention, le contact des ailettes avec la surface externe de la gaine du câble se réalise en mouvement et dans un flux d'air comprimé déjà établi, sans nécessiter à aucun moment l'arrêt du câble, la solidarisation des ailettes avec le câble s'effectuant quasi instantanément et en tout cas à une vitesse largement supérieure à celle de déplacement du câble dans la conduite.

En particulier, la taille du magasin à ailettes et le nombre de ces dernières pourraient être variables d'une réalisation à l'autre, en notant en outre que le magasin peut être aisément rechargé par ouverture de sa partie arrière et mise en place de nouvelles ailettes en cas de nécessité, notamment lorsque la longueur du câble l'exige. La structure des deux ailettes en deux demi-ailettes pouvant être facilement solidarisées rend cette opération de rechargement très simple à mettre en oeuvre.

## Revendications

1. Procédé pour la mise en place d'un câble (1) selon l'axe d'une conduite (2) cylindrique de grande longueur, au moyen d'une pression d'air comprimé exerçant sur ce câble (1) une poussée appropriée, caractérisée en ce qu'il consiste à monter à une des extrémités (7) de la conduite (2) un boîtier étanche (10), traversé axialement par le câble (1) et comportant au moins un raccord (11) avec une source d'air comprimé (12) débitant dans la boîtier (10), et à fixer, à intervalles donnés sur la gaine (25) du câble (1), des ailettes (15) successives, entourant la gaine (25) dans des plans perpendiculaire à l'axe du câble, le diamètre externe de chaque ailette (15) étant légèrement inférieur à celui de la conduite (2).

2. Dispositif pour la mise en oeuvre du procédé selon la revendication 1, caractérisé en ce qu'il comporte, dans le boîtier étanche (10) monté à l'extrémité de la conduite (2), un magasin (51) à ailettes (15) à travers lequel se déplace axialement le câble (1), traversant librement ces ailettes, et dans lequel celles-ci sont disposées successivement l'une derrière l'autre, perpendiculairement à l'axe du câble, un mécanisme à deux butées (54,59) d'arrêt pour immobiliser les ailettes à l'intérieur du magasin puis pour libérer la première ailette en même temps qu'il arrête l'ailette suivante, des moyens (39) pour provoquer un rapprochement progressif d'organes de verrouillage (27), propres à solidariser tour à tour chaque ailette contre la surface externe de la gaine (25) du câble.

3. Dispositif selon la revendication 1, caractérisé en ce que les ailettes (15) sont formées de deux parties complémentaires (16,17), constituées chacune d'une plaquette mince à profil semi-cylindrique, les deux parties étant solidarisées entre elles selon un plan de joint diamétral commun et comportant un évidement central (24) délimitant un passage axial dont le diamètre est légèrement supérieur à celui du câble (1) afin de ménager un jeu intermédiaire avec la gaine externe (25) de ce câble.

4. Dispositif selon la revendication 3, caractérisé en ce que les deux parties (16,17) d'une même ailette comportent respectivement des nervures (19) et des rainures (18) coopérantes en vue de la solidarisation des deux parties.

5. Dispositif selon la revendication 4, caractérisé en ce que les nervures (19) et rainures (18) présentent un profil en queue d'aronde.

6. Dispositif selon l'une quelconque des revendications 3 à 5, caractérisé en ce que chaque plaquette semi-cylindrique, constituant une des deux parties de l'ailette, comporte deux alésages (20,21 ou 22,23) sensiblement radiaux, angulairement espacés et dans chacun desquels est monté un des organes de verrouillage (27) de l'ailette (15) sur la gaine (25) du câble (1).

7. Dispositif selon l'une quelconque des revendications 2 à 6, caractérisé en ce que chaque organe de verrouillage (27) est constitué par un doigt, comportant une tête de poussée (28) faisant légèrement saillie à l'extérieur de la plaquette semi-cylindrique (19 ou 17) et en contact, à l'extérieur de l'alésage le recevant, en direction de l'évidement central (24), avec un bloc élastique (31), propre à être déplacé sous l'effet de la tête de poussée dans le jeu intermédiaire réservé au passage du câble, afin de s'écraser partiellement sur la gaine externe (25) de celui-ci, en solidarisant l'ailette avec le câble.

8. Dispositif selon la revendication 7, caractérisé en ce que le bloc élastique (31) est constitué par du caoutchouc ou par un matériau analogue, présentant un fort coefficient de frottement, afin de solidariser fermement l'ailette et le câble.

9. Dispositif selon l'une des revendications 7 ou 8, caractérisé en ce que la tête de poussée (28) de chaque doigt de verrouillage (27) comporte au moins un cliquet à billes (32) ou analogue, propre à coopérer avec une encoche (33) prévue dans la paroi interne de l'alésage (20,21,22,23) dans lequel se déplace le doigt afin d'immobiliser la tête dans la position où le bloc élastique (31) est partiellement écrasé sur la gaine externe (25), en bloquant alors l'ailette (15) en position par rapport à celle-ci.

10. Dispositif selon l'une quelconque des revendications 3 à 9, caractérisé en ce que les deux plaquettes (16, 17) de chaque ailette (15) comportent chacune deux alésages et deux doigts de verrouillage, les alésages (20,21) d'une plaquette (16) étant disposés dans le prolongement de ceux (22,23) de l'autre plaquette (17) de la même ailette de façon à ce que les quatre doigts (27) exercent radialement sur la gaine (25) du câble un effort de blocage régulièrement réparti.

11. Dispositif selon l'une des revendications 2 à 10, caractérisé en ce que le boîtier (10) comporte une paroi intérieure (44), munie d'un manchon étanche (45) de guidage du câble qui traverse ce manchon et des orifices d'admission (48) d'air sous pression, la magasin (51) à ailettes étant monté à l'intérieur du boîtier dans le prolongement du manchon.

12. Dispositif selon la revendication 11, caractérisé en ce que le magasin (51) comporte une paroi cylindrique dont le diamètre est supérieur à celui des ailettes (15) augmenté de la distance sur laquelle les têtes de poussée (28) des têtes de verrouillage (27) font saillie à l'extérieur de ces ailettes.

13. Dispositif selon l'une des revendications 11 ou 12, caractérisé en ce que les butées d'arrêt (54,59) des ailettes (15) dans le magasin comportent deux crochets (54a,54b - 59a,59b), solidaires chacun du piston (55a,55b) d'un vérin à double effet et à mouvements alternatifs, commandé selon une séquence déterminée, de manière à permettre successivement de libérer la première ailette (15) tout en bloquant la suivante, afin de libérer les ailettes une à une à la sortie du magasin (51).

14. Dispositif selon l'une quelconque des revendications 2 à 13, caractérisé en ce que les moyens (39) pour provoquer le rapprochement progressif des organes de verrouillage de chaque ailette consistent en une portée conique (40,41), prévue à l'intérieur du boîtier, en aval du magasin (51) par rapport au sens de déplacement du câble (1), de telle sorte que, pour chaque ailette (15) libérée du magasin par l'une des deux butées (54,59) et se déplaçant sous la poussée de l'air comprimé admis dans le boîtier (10), les têtes (28) des doigts de verrouillage (27) soient progressivement repoussées dans leurs alésages (21,22,23,24), en réalisant l'écrasement de leurs blocs élastiques (31) sur la gaine (25), jusqu'à l'immobilisation de ces doigts, notamment par les cliquets à clips (32) ou à bille qu'ils comportent.

15. Dispositif selon l'une des revendications 3 à 14, caractérisé en ce que les surfaces externes des têtes de poussée (28) des doigts de verrouillage (27) sont recouvertes d'un matériau plastique à faible coefficient de frottement, notamment du genre "Teflon".

## Patentansprüche

1. Verfahren zum Einziehen eines Kabels (1) entlang der Achse eines sehr langen zylindrischen Rohrs (2) mittels eines Luftdrucks, der auf dieses Kabel (1) eine geeignete Schubkraft ausübt, dadurch gekennzeichnet, daß es darin besteht, an einem der Enden (7) des Rohrs (2) ein dichtes Gehäuse (10) anzubringen, das axial von dem Kabel (1) durchsetzt ist und wenigstens einen Anschluß (11) an eine Luftdruckquelle (12) aufweist, die in das Gehäuse (10) abgibt, und in gegebenen Intervallen an dem Mantel (25) des Kabels aufeinanderfolgende Flügel (15) zu befestigen, die den Mantel (25) in zu der Achse des Kabels senkrechten Ebenen umgeben, wobei der Außendurchmesser jedes Flügels (15) etwas unter demjenigen des Rohrs (2) liegt.

2. Vorrichtung zur Durchführung des Verfahrens nach Anspruch 1, dadurch gekennzeichnet, daß sie in dem am Ende des Rohrs (2) angebrachten dichten Gehäuse (10) ein Magazin (51) für die Flügel (15) aufweist, durch welches sich das Kabel (1) axial verschiebt, wobei es diese Flügel frei durchquert, und in welchem diese in Folge hintereinander senkrecht zur Achse des Kabels angeordnet sind, einen Mechanismus mit zwei Sperranschlägen (54, 59) zur Fixierung der Flügel im Inneren des Magazins und dann zur Freigabe des ersten Flügels zur gleichen Zeit, zu der der folgende Flügel gesperrt wird, Mittel (39) zum Hervorrufen einer fortschreitenden Annäherung von Verriegelungsorganen (27), die dazu geeignet sind, jeden Flügel der Reihe nach gegen die Außenfläche des Mantels (25) des Kabels zu befestigen.

3. Vorrichtung nach Anspruch 1, dadurch gekennzeichnet, daß Flügel (15) aus zwei komplementären Teilen (16, 17) geformt sind, die jeweils aus einer dünnen Scheibe mit halbzylindrischem Profil bestehen, wobei die beiden Teile miteinander nach einer gemeinsamen diametralen Verbindungsebene fest verbunden sind und eine zentrale Ausnehmung (24) aufweisen, die einen axialen Durchgang begrenzt, dessen Durchmesser etwas über demjenigen des Kabels (1) liegt, um ein Zwischenspiel mit dem Außenmantel (25) dieses Kabels vorzusehen.

4. Vorrichtung nach Anspruch 3, dadurch gekennzeichnet, daß die beiden Teile (16, 17) ein und desselben Flügels vorteilhaft Federn (19) bzw. Nuten (18) umfassen, die zur festen Verbindung der beiden Teile zusammenwirken.

5. Vorrichtung nach Anspruch 4, dadurch gekennzeichnet, daß die Federn (19) und Nuten (18) ein schwalbenschwanzförmiges Profil aufweisen.

6. Vorrichtung nach einem der Ansprüche 3 bis 5, dadurch gekennzeichnet, daß jede halbzylindrische Scheibe, die einen der beiden Teile des Flügels bildet, zwei im wesentlichen radiale Bohrungen (20, 21 oder 22, 23) aufweist, die winklig beabstandet sind und in denen jeweils eines der Verriegelungsorgane (27) für den Flügel (15) an dem Mantel (25) des Kabels (1) angebracht ist.

7. Vorrichtung nach einem der Ansprüche 2 bis 6, dadurch gekennzeichnet, daß jedes Verriegelungsorgan (27) durch einen Finger gebildet ist, der einen Schubkopf (28) aufweist, der leicht außerhalb der halbzylindrischen Scheibe (16 oder 17) vorspringt und im Inneren der ihn aufnehmenden Bohrung in Richtung der zentralen Ausnehmung (24) mit einem elastischen Block (31) in Kontakt steht, der unter der Wirkung des Schubkopfes in dem für den Durchgang des Kabels reservierten Zwischenspiel verschoben werden kann, um teilweise an dessen Außenmantel (25) zerquetscht zu werden, wobei der Flügel mit dem Kabel fest verbunden wird.

8. Vorrichtung nach Anspruch 7, dadurch gekennzeichnet, daß der elastische Block (31) aus Gummi oder einem analogen Material gebildet ist, das einen hohen Reibungskoeffizienten aufweist, um den Flügel und das Kabel fest miteinander zu verbinden.

9. Vorrichtung nach einem der Ansprüche 7 oder 8, dadurch gekennzeichnet, daß der Schubkopf (28) jedes Verriegelungsfingers (27) wenigstens eine Sperraste mit einer Kugel (32) oder entsprechendem aufweist, die mit einer in der Innenwand der Bohrung (20, 21, 22, 23) vorgesehenen Kerbe (33) zusammenwirken kann, in der sich der Finger verschiebt, um den Kopf in der Position zu fixieren, wo der elastische Block (31) teilweise an dem Außenmantel (25) zerquetscht ist, womit dann der Flügel (15) dazu in Position blockiert wird.

10. Vorrichtung nach einem der Ansprüche 3 bis 9, dadurch gekennzeichnet, daß die beiden Scheiben (16, 17) jedes Flügels (15) jeweils zwei Bohrungen und zwei Verriegelungsfinger aufweisen, wobei die Bohrungen (20, 21) einer Scheibe (16) in der Verlängerung derjenigen (22, 23) der anderen Scheibe (17) des gleichen Flügels derart angeordnet sind, daß die vier Finger (27) radial auf den Mantel (25) des Kabels eine regelmäßig verteilte Blockierkraft ausüben.

11. Vorrichtung nach einem der Ansprüche 2 bis 10, dadurch gekennzeichnet, daß das Gehäuse (10) eine Innenwand (44) aufweist, die mit einer dichten Führungsmuffe (45) für das Kabel, das diese Muffe durchquert, sowie mit Drucklufteinlaßöffnungen (48) versehen ist, wobei das Flügelmagazin (51) im Inneren des Gehäuses in der Verlängerung der Muffe angebracht ist.

12. Vorrichtung nach Anspruch 11, dadurch gekennzeichnet, daß das Magazin (51) eine zylindrische Wand aufweist, deren Durchmesser über demjenigen der Flügel (15) plus dem Abstand liegt, über den die Schubköpfe (28) der Verriegelungsfinger (27) von diesen Flügeln nach außen hervorragen.

13. Vorrichtung nach einem der Ansprüche 11 oder 12, dadurch gekennzeichnet, daß die Sperranschläge (54, 59) für die Flügel (15) in dem Magazin zwei Haken (54a, 54b - 59a, 59b) aufweisen, die jeweils mit dem Kolben (55a, 55b) eines doppeltwirkenden Zylinders mit abwechselnden Bewegungen fest verbunden sind, der nach einer bestimmten Abfolge gesteuert wird, so daß nacheinander die Freigabe des ersten Flügels (15) ermöglicht wird, wobei gleichzeitig der folgende blockiert wird, um die Flügel nacheinander am Ausgang des Magazins (51) freizugeben.

14. Vorrichtung nach einem der Ansprüche 2 bis 13, dadurch gekennzeichnet, daß die Mittel (39) zum Hervorrufen der fortschreitenden Annäherung der Verriegelungsorgane jedes Flügels aus einer konischen Lagerfläche (40, 41) bestehen, die im Inneren des Gehäuses unterhalb des Magazins (51) bezüglich der Verschiebungsrichtung des Kabels (1) derart vorgesehen ist, daß die Köpfe (28) der Verriegelungsfinger (27) für jeden Flügel (15), der aus dem Magazin durch einen der beiden Anschläge (54, 59) freigegeben wird und sich unter der Schubkraft der in das Gehäuse (10) eingelassenen Druckluft verschiebt, fortschreitend in ihre Bohrungen (21, 22, 23, 24) zurückgedrückt werden, wobei ihre elastischen Blöcke (31) an dem Mantel (25) zerquetscht werden, bis diese Finger insbesondere durch die Klammer- oder Kugelsperrasten (32) fixiert sind, die sie aufweisen.

15. Vorrichtung nach einem der Ansprüche 3 bis 14, dadurch gekennzeichnet, daß die Außenflächen der Schubköpfe (28) der Verriegelungsfinger (27) mit einem Kunststoffmaterial mit niedrigem Reibungskoeffizienten, insbesondere vom Typ "Teflon" beschichtet sind.

## Claims

1. Method for laying a cable (1) along the axis of a cylindrical conduit (2) of great length, by means of compressed air pressure exerting an appropriate thrust on this cable (1), characterised in that it consists of mounting at one of the ends (7) of the conduit (2), an air-tight casing (10) through which the cable (1) passes axially and comprising at least one connection (11) to a source of compressed air (12) discharging into the casing (10), and of fixing, at given intervals on the sheath (25) of the cable (1), successive fins (15), surrounding the sheath (25) in planes perpendicular to the axis of the cable, the outer diameter of each fin (15) being slightly less than that of the conduit (2).

2. Device for carrying out the method according to Claim 1, characterised in that it comprises, in the air-tight casing (10) mounted at the end of the conduit (2), a magazine (51) comprising fins (15) through which the cable (1) moves axially, passing freely through these fins and in which the latter are disposed in succession one behind the other, perpendicularly to the axis of the cable, a mechanism comprising two stopping abutments (54, 59) for immobilising the fins inside the magazine then for releasing the first fin at the same time that it stops the following fin, means (39) for causing a progressive drawing together of locking members (27), able to interlock, in turns, each fin against the outer surface of the sheath (25) of the cable.

3. Device according to Claim 1, characterised in that the fins (15) are formed of two complementary parts (16, 17), each constituted by a thin plate having a semi-cylindrical profile, the two parts being interlocked along a common diametral interface and comprising a central recess (24) defining an axial passage whereof the diameter is slightly greater than that of the cable (1) in order to provide an intermediate clearance with the outer sheath (25) of this cable.

4. Device according to Claim 3, characterised in that the two parts (16, 17) of the same fin respectively comprise ribs (19) and grooves (18) cooperating for the purpose of the interlocking of the two parts.

5. Device according to Claim 4, characterised in that the ribs (19) and grooves (18) have a dovetail profile.

6. Device according to one of Claims 3 to 5, characterised in that each semi-cylindrical plate, constituting one of the two parts of the fin, comprises two bores (20, 21) or (22, 23), which are substantially radial, spaced apart angularly and in each of which is mounted one of the members (27) for locking the fin (15) on the sheath (25) of the cable (1).

7. Device according to one of Claims 2 to 6, characterised in that each locking member (27) is constituted by a pin, comprising a thrust head (28) projecting slightly outside the semi-cylindrical plate (16 or 17) and in contact, inside the bore receiving it, in the direction of the central recess (24), with a resilient block (31), able to be moved under the effect of the thrust head in the intermediate clearance reserved for the passage of the cable, in order to be squashed partially on the outer sheath (25) of the latter, thus interconnecting the fin to the cable.

8. Device according to Claim 7, characterised in that the resilient block (31) is constituted by rubber or by a similar material, having a high coefficient of friction, in order to interconnect the fin and the cable solidly.

9. Device according to one of Claims 7 or 8, characterised in that the thrust head (28) of each locking pin (27) comprises at least one ball catch (32) or the like, able to cooperate with a notch (33) provided in the inner wall of the bore (20, 21, 22, 23) in which the pin moves in order to immobilise the head in the position in which the resilient block (31) is partially squashed on the outer sheath (25), thus locking the fin (15) in position with respect to the latter.

10. Device according to one of Claims 3 to 9, characterised in that the two plates (16, 17) of each fin (15) each comprise two bores and two locking pins, the bores (20, 21) of one plate (16) being disposed as an extension of those (22, 23) of the other plate (17) of the same fin in order that the four pins (27) exert radially on the sheath (25) of the cable a uniformly distributed locking force.

11. Device according to one of Claims 2 to 10, characterised in that the casing (10) comprises an inner wall (44), provided with an air-tight sleeve (45) for guiding the cable which passes through this sleeve and orifices (48) for the admission of air under pressure, the magazine (51) for fins being mounted inside the casing as an extension of the sleeve.

12. Device according to Claim 11, characterised in that the magazine (51) comprises a cylindrical wall whereof the diameter is greater than that of the fins (15) increased by the distance by which the thrust heads (28) of the locking pins (27) project outside these fins.

13. Device according to one of Claims 11 or 12, characterised in that the stopping abutments (54, 59) of the fins (15) in the magazine comprise two hooks (54a, 54b - 59a, 59b), each integral with the piston (55a, 55b) of a double-acting jack and with alternating movements, controlled according to a predetermined sequence, in order to make it possible in succession to release the first fin (15) whilst locking the next, in order to release the fins one by one at the outlet of the magazine (51).

14. Device according to one of Claims 2 to 13, characterised in that the means (39) for causing the progressive drawing together of the locking members of each fin consist of a conical bearing (40, 41), provided inside the casing, downstream of the magazine (51) with respect to the direction of movement of the cable (1), so that, for each fin (15) released from the magazine by one of the two abutments (54, 59) and moving under the thrust of the compressed air admitted to the casing (10), the heads (28) of the locking pins (27) are progressively pushed into their bores (21, 22, 23, 24) whilst achieving squashing of their resilient blocks (31) on the sheath (25), until these pins are immobilised, in particular by the clip or ball catches (32) which they comprise.

15. Device according to one of Claims 3 to 14, characterised in that the outer surfaces of the thrust heads (28) of the locking pins (27) are covered by a plastic material having a low coefficient of friction, in particular of the "Teflon" type.
